# EUROPÄISCHE PATENTSCHRIFT

(11) **EP 1 873 378 B1**
(45) Veröffentlichungstag und Bekanntmachung des Hinweises auf die Patenterteilung: **18.02.2009**
(21) Anmeldenummer: 06116076.8
(22) Anmeldetag: 26.06.2006
(51) Int. Cl.: F02D 19/06, F02D 19/08, F02D 41/00

(54) **Verfahren zur Bestimmung der Kraftstoffsorte eines in einem Kraftstoffversorgungssystem einer Brennkraftmaschine befindlichen Kraftstoffes und Kraftstoffversorgungssystem zur Durchführung eines derartigen Verfahrens**
Method of determinig the type of fuel used in the fuels system of an internal combustion engine and fuel system for performing the method
Procédé de determination de la qualité d'un combustible utilisé dans un système d'alimentation d'un moteur à combustion interne et système d'alimentation pour l'esecution du procèdè.

(43) Veröffentlichungstag der Anmeldung: 02.01.2008
(73) Patentinhaber: Ford Global Technologies, LLC, Dearborn, MI 48126 (US)
(72) Erfinder: Kramer, Ulrich, Dr., 51429 Bergisch Gladbach (DE)
(74) Vertreter: Drömer, Hans-Carsten

(56) Entgegenhaltungen:
- EP-A- 0 480 179
- EP-A1- 0 478 985
- WO-A-03/087560
- JP-A- 9 072 252

## Beschreibung

Die Erfindung betrifft ein Verfahren zur Bestimmung der Kraftstoffsorte eines in einem Kraftstoffversorgungssystem einer Brennkraftmaschine befindlichen Kraftstoffes.

Des weiteren betrifft die Erfindung ein Kraftstoffversorgungssystem zur Durchführung eines derartigen Verfahrens.

Im Rahmen der vorliegenden Erfindung umfaßt der Begriff Brennkraftmaschine sowohl Dieselmotoren als auch Ottomotoren.

Aufgrund der begrenzten Ressourcen an fossilen Energieträgern, insbesondere aufgrund der begrenzten Vorkommen an Mineralöl als Rohstoff für die Gewinnung von Kraftstoffen für den Betrieb von Verbrennungskraftmaschinen, wird der Einsatz alternativer Kraftstoffe zum Betrieb von Brennkraftmaschinen zunehmend als zielführend angesehen.

So werden bei Ottomotoren neben Benzin als dem traditionellen Ottokraftstoff beispielsweise Erdgas (CNG), Ethanol oder Kraftstoffmischungen aus Benzin und Ethanol als Kraftstoffe verwendet. Im Rahmen der vorliegenden Erfindung wird zwischen Ottokraftstoffen und Dieselkraftstoffen unterschieden, wobei spezifische Kraftstoffe, die durch bestimmte Kraftstoffeigenschaften - wie beispielsweise der Oktanzahl - gekennzeichnet sind, als Kraftstoffsorte bezeichnet werden.

Der Marktanteil an Brennkraftmaschinen, die nicht nur mit einer spezifischen Kraftstoffsorte, sondern mit unterschiedlichen Kraftstoffsorten betrieben werden können, nimmt stetig zu. Verstärkt und unterstützt wird diese Entwicklung durch den Gesetzgeber, insbesondere durch steuerliche Vergünstigungen und gesetzliche Vorschriften. In Brasilien ist reiner Benzinkraftstoff schon heute nicht mehr erhältlich und in Deutschland wurde vorgeschlagen, diesem Beispiel zu folgen und dem Benzin grundsätzlich einen Ethanolanteil von mindestens fünf Prozent beizumischen.

Da die unterschiedlichen Kraftstoffsorten unterschiedliche physikalische und chemische Eigenschaften aufweisen, muß eine Brennkraftmaschine, die für den Betrieb mit unterschiedlichen Kraftstoffsorten ausgelegt ist, jeweils an die momentan verwendete Kraftstoffsorte angepaßt werden. Dies erfolgt häufig durch eine Anpassung der Betriebsparameter der Brennkraftmaschine, beispielsweise des Zündzeitpunktes und des Einspitzzeitpunktes. Dabei bedeutet "Anpassung" im Rahmen der vorliegenden Erfindung, daß ein Betriebsparameter variabel ist und während des Betriebes kraftstoffsortenspezifisch angepaßt wird.

Dahingegen können andere Betriebsparameter wie die Steuerzeiten, der Ladedruck, die Kühlwassertemperatur, die Einspritzdauer, die Ladeluftmenge und/oder dergleichen, aber auch konstruktive Parameter, beispielsweise das Kompressionsverhältnis, von Hause aus d. h. originär auf den Betrieb mit unterschiedlichen Kraftstoffsorten ausgelegt werden, ohne daß eine kraftstoffsortenspezifische Anpassung während des Betriebs vorgenommen wird.

Die kraftstoffspezifische Auslegung des Kompressionsverhältnisses trägt beispielsweise bei Ottokraftstoffen dem Umstand Rechnung, daß unterschiedliche Kraftstoffsorten eine unterschiedliche Klopffestigkeit, welche durch die Oktanzahlen RON bzw. MON angegeben wird, aufweisen. D. h. ein konkretes Kompressionsverhältnis, welches einen problemlosen Betrieb der Brennkraftmaschine mit einem spezifischen Kraftstoff zuläßt, kann bei einem anderen Kraftstoff bereits zum Klopfen d. h. zur Selbstzündung von Gemischanteilen vor Einleitung der eigentlichen Zündung fuhren.

Da ein Klopfen unter sämtlichen Betriebsbedingungen bei Verwendung aller in Frage kommender Kraftstoffsorten zu verhindern ist, um Beschädigungen an der Brennkraftmaschine zu vermeiden, wird die Brennkraftmaschine nach dem Stand der Technik häufig auf den Kraftstoff mit der geringsten Klopffestigkeit ausgelegt. Die Betriebsparameter und konstruktiven Parameter der Brennkraftmaschine, die Einfluß auf das Klopfen haben d. h. die Selbstzündung von Gemischanteilen beeinflussen und damit auch begünstigen können, werden dabei hinsichtlich des Kraftstoffes mit der geringsten Klopffestigkeit ausgelegt.

So werden insbesondere das Kompressionsverhältnis, die Kühltemperatur und der Ladedruck nach oben begrenzt, um ein Klopfen bei Verwendung des Kraftstoffes mit der geringsten Klopffestigkeit sicher zu vermeiden. Darüber hinaus kann die Steuerzeit, zu der der Einlaß geschlossen wird, nicht beliebig nach früh verschoben werden, so daß die Verwendung unterschiedlicher Kraftstoffsorten mit verschiedener Klopffestigkeit auch diesbezüglich eine Reglementierung d.h. Einschränkung mit sich bringt.

Aus dem Stand der Technik sind darüber hinaus auch Konzepte bekannt, bei denen die Brennkraftmaschine auf den Kraftstoff mit der größten Klopffestigkeit ausgelegt wird. D. h. das Kompressionsverhältnis, der Ladedruck, die Kühltemperatur und die Steuerzeit "Einlaß schließt" werden entsprechend dem Kraftstoff mit der größten Klopffestigkeit aus- bzw. festgelegt.

Um ein Klopfen einer derartig ausgelegten Brennkraftmaschine bei Verwendung von Kraftstoffen mit geringerer Klopffestigkeit zu verhindern, wird gemäß dem Stand der Technik der Zündzeitpunkt nach spät verschoben, sobald ein Klopfen auftritt d. h. sobald Selbstzündungen im Kraftstoff-Luft-Gemisch beobachtet werden.

Häufig wird eine Anpassung an unterschiedliche Kraftstoffe - wie zuvor ausgeführt - durch eine Änderung des Zündzeitpunktes vorgenommen. Aber auch die Anpassung der Einspritzdauer kann zielführend sein.

Sind die unterschiedlichen Kraftstoffe beispielsweise durch einen unterschiedlich großen Ethanolanteil bzw. Benzinanteil gekennzeichnet, kann zur Anpassung der Brennkraftmaschine an unterschiedliche Kraftstoffe bzw. unterschiedliche Ethanolanteile eine Veränderung der Einspritzdauer erforderlich sein. Zu berücksichtigen ist dabei, daß Ethanol einen geringeren Heizwert aufweist als Benzin, weshalb mit zunehmendem Ethanolgehalt eine größere Gesamtkraftstoffinenge eingespritzt werden muß, um während eines Arbeitspiels dieselbe Energie freizusetzen bzw. den gleichen Mitteldruck zu generieren. Zielführend wäre es also beispielsweise, die Einspritzdauer mit zunehmendem Ethanolgehalt zu vergrößern.

In der Praxis erfolgt die Anpassung der Brennkraftmaschine an unterschiedliche Kraftstoffsorten in der Regel durch Verwendung unterschiedlicher Kennfelder für unterschiedliche Kraftstoffsorten.

Voraussetzung für die Anpassung der Brennkraftmaschine an eine spezifische Kraftstoffsorte ist aber zunächst die Kenntnis der momentan verwendeten Kraftsorte d. h. der momentan eingespritzten Kraftstoffsorte. Zu berücksichtigen ist dabei, daß Fahrzeuge, die für den Einsatz unterschiedlicher Kraftstoffsorten ausgelegt sind, häufig nur einen Kraftstofftank zur Bevorratung der Kraftstoffe aufweisen, so daß vorzugsweise nicht nur zwischen zwei unterschiedlichen Kraftstoffsorten zu unterscheiden ist, sondern aufgrund der Durchmischung der Kraftstoffsorten im Tank beim Wechsel der Kraftstoffsorte bzw. bei der Betankung des Fahrzeugs mit einer anderen Kraftstoffsorte als der im Tank Befindlichen zwischen einer Vielzahl an Kraftstoffsorten unterschieden werden muß.

Zudem sollen Brennkraftmaschinen der in Rede stehenden Art häufig nicht nur für zwei konkrete Kraftstoffsorten kalibriert werden können. Ottomotoren, die mit einem Gemisch aus Benzin und Ethanol betrieben werden, sollen für Kraftstoffsorten mit beliebigem Ethanolgehalt angepaßt werden können.

Selbst wenn das Fahrzeug unterschiedliche Kraftstofftanks für die unterschiedlichen Kraftstoffsorten aufweist und eine Durchmischung der unterschiedlichen Sorten im Tank aufgrund der separaten Kraftstofftanks ausgeschlossen ist, gilt das zuvor Gesagte, denn das Kraftstoffversorgungssystem bevorratet auch Kraftstoff, wenn auch nur eine kleine Menge.

Folglich besteht die oben beschriebene Problematik auch bei derartigen Fahrzeugen, bei denen zwischen unterschiedlichen Kraftstofftanks gewechselt werden kann, denn die Förderung des Kraftstoffes aus einem bestimmten Tank liefert keine eindeutigen Informationen über die im Kraftstoffversorgungssystem befindliche Kraftstoffsorte und damit keine Informationen über die momentan eingespritzte Kraftstoffsorte, hinsichtlich der die Anpassung der Brennkraftmaschine aber letztlich zu erfolgen hat.

Herkömmliche Verfahren zur Bestimmung der Kraftstoffsorte eines in einem Kraftstoffversorgungssystem einer Brennkraftmaschine befindlichen Kraftstoffes nutzen eine im Abgassystem der Brennkraftmaschine angeordnete Lambda-Sonde, mit der die Sauerstoffkonzentration im Abgas erfaßt wird.

Aufgrund der unterschiedlichen physikalischen und chemischen Eigenschaften verschiedener Kraftstoffsorten, insbesondere aufgrund unterschiedlicher Heizwerte und Dichten, werden - gleichgroße Ladeluftmengen vorrausgesetzt - bei unveränderter Einspritzdauer unterschiedlich große Mengen an Sauerstoff während der Verbrennung des Kraftstoff-Luft-Gemisches im Brennraum umgesetzt, so daß das Abgas in Abhängigkeit von der jeweils verwendeten Kraftstoffsorte unterschiedlich hohe Sauerstoffkonzentrationen aufweist.

Unter Verwendung der mittels Lambda-Sonde erfaßten Sauerstoffkonzentration kann somit auf die Kraftstoffsorte des momentan im Kraftstoffversorgungssystem befindlichen Kraftstoffes geschlossen werden, soweit die entsprechenden Kenntnisse über die physikalischen und chemischen Eigenschaften der in Frage kommenden Kraftstoffsorten vorliegen.

Dieses nach dem Stand der Technik eingesetzte Verfahren weist aber gleich mehrere Nachteile auf. Zum einen arbeitet dieses Verfahren mit einem gewissen Zeitverzug, der durch die Arbeitsweise des Verfahrens begründet ist und daher unvermeintlich ist. Da die Kraftstoffsorte prinzipbedingt auf Grundlage der Abgaszusammensetzung bzw. der Sauerstoffkonzentration im Abgas bestimmt wird, kann die verwendete Kraftstoffsorte erst bestimmt werden, nachdem bereits ein Teil des zu untersuchenden Kraftstoffes verbrannt wurde, die Abgase als Verbrennungsprodukte der Verbrennung vorliegen und das Abgassystem durchlaufen haben d.h. bis zur Lambda-Sonde gelangt sind. Eine falscher Betrieb der Brennkraftmaschine bzw. eine nicht sortengerechte Kalibrierung der Brennkraftmaschine kann folglich - zumindest für ein Arbeitsspiel - nicht vermieden werden.

Zum anderen liefert die Lambda-Sonde nur verläßliche Daten, wenn sie eine bestimmte Mindesttemperatur aufweist. Insbesondere nach einem Kaltstart benötigt die Lambda-Sonde eine gewisse Aufheizperiode, die bis zu 30 Sekunden betragen kann, um die erforderliche Betriebstemperatur zu erreichen. In der Zwischenzeit kann eine Kalibrierung auf eine spezifische Kraftstoffsorte nicht vorgenommen werden, so daß ein falscher Betrieb der Brennkraftmaschine nicht auszuschließen ist.

Die zuvor beschriebenen Zusammenhänge werden insbesondere dann relevant, wenn kurz vor dem Abstellen der Brennkraftmaschine eine von der im Kraftstoffversorgungssystem befindlichen Kraftstoffsorte abweichende Kraftstoffsorte getankt wird, die Brennkraftmaschine gerade noch solange betrieben wird, bis die im Kraftstoffversorgungssystem befindliche Kraftstoffmenge verbraucht ist, und die Brennkraftmaschine beim Neustart bzw. Kaltstart mit der zuvor neu bevorrateten Kraftstoffsorte betrieben wird, die vor dem Abstellen nicht mehr bestimmt werden konnte.

Das Verfahren unter Verwendung einer Lambda-Sonde leidet zudem unter den beim Einsatz von Meßtechnik häufig auftretenden Abnutzungs- bzw. Verschleißerscheinungen. Insbesondere die mit zunehmender Lebensdauer bzw. Betriebsdauer sich einstellende Verschmutzung der im Abgas angeordneten Lambda-Sonde und das mit zunehmender Betriebsdauer verstärkte Driften des Nullpunktes führt zu einer Abnahme der Güte der von der Lambda-Sonde erfaßten Sauerstoffkonzentration bzw. gelieferten Daten.

Grundsätzlich muß angemerkt werden, daß eine nicht sortengerechte Kalibrierung der Brennkraftmaschine Konsequenzen zur Folge haben kann. Zum einen kann eine nicht sortengerechte Kalibrierung der Brennkraftmaschine zu Schäden fuhren, insbesondere beim Auftreten von Selbstzündungen d.h. beim Klopfen. Zündaussetzer können ebenfalls auftreten.

Zum anderen kann ein nicht der Kraftstoffsorte angepaßter Betrieb der Brennkraftmaschine zu einer erhöhten Schadstoffemission führen, insbesondere nach einem Kaltstart der Brennkraftmaschine. Um aber zukünftige Grenzwerte für Schadstoffemissionen einhalten zu können, ist es unerläßlich, möglichst wenig Schadstoffe zu emittieren.

Vor diesem Hintergrund ist es die Aufgabe der vorliegenden Erfindung, ein Verfahren gemäß dem Oberbegriff des Anspruchs 1 d. h. der gattungsbildenden Art aufzuzeigen, mit dem die Bestimmung der Kraftstoffsorte eines in einem Kraftstoffversorgungssystem einer Brennkraftmaschine befindlichen Kraftstoffes schneller und zuverlässiger möglich ist als nach dem Stand der Technik und insbesondere ein nicht sortengerechter Betrieb der Brennkraftmaschine ausgeschlossen werden kann.

Eine weitere Teilaufgabe der vorliegenden Erfindung ist es, ein Kraftstoffversorgungssystem zur Durchführung eines derartigen Verfahrens bereitzustellen.

Gelöst wird die erste Teilaufgabe durch ein Verfahren zur Bestimmung der Kraftstoffsorte eines in einem Kraftstoffversorgungssystem einer Brennkraftmaschine befindlichen Kraftstoffes, das dadurch gekennzeichnet ist, daß mittels eines Drucksensors in einem abgrenzbaren Volumen des Kraftstoffversorgungssystems der Druckabfall infolge eines Kraftstoffleckagestromes aus diesem abgrenzbaren Volumen in Gestalt einer Druckabfallkurve ermittelt wird, wobei die auf diese Weise ermittelte Druckabfallkurve mit mindestens einer Referenzkurve aus einem bereitgestellten Satz von mindestens zwei Referenzkurven verglichen wird, um die Kraftstoffsorte zu bestimmen.

Das erfindungsgemäße Verfahren nutzt zum einen den Umstand, daß ein Leckagestrom aus dem Kraftstoffversorgungssystem einer Brennkraftmaschine nicht vollständig unterbunden werden kann d. h. eine - wenn auch grundsätzlich ungewollte und zu unterbindende Leckage - jedem beliebigen Kraftstoffversorgungssystem immanent ist. Zum anderen macht sich das erfindungsgemäße Verfahren den Umstand zunutze, daß Kraftstoffe mit unterschiedlichen physikalischen Eigenschaften, insbesondere unterschiedlichen Viskositäten, ein unterschiedliches Leckageverhalten aufweisen.

Aufgrund des unterschiedlichen Leckageverhaltens der verschiedenen Kraftstoffsorten wird der in einem abgegrenzten Volumen des Kraftstoffversorgungssystems aufgebaute Kraftstoffdruck unterschiedlich schnell abgebaut und zwar in Abhängigkeit von der jeweiligen Viskosität des Kraftstoffes und damit in Abhängigkeit von der jeweiligen Kraftstoffsorte.

Der Druckabfall in einem abgrenzbaren Volumen des Kraftstoffversorgungssystems ist somit charakteristisch für eine bestimmte Kraftstoffsorte, weshalb der mittels Drucksensor erfaßte Druckabfall bzw. die Druckabfallkurve zur Identifizierung d. h. zur Bestimmung des im Kraftstoffversorgungssystem befindlichen Kraftstoffes herangezogen werden kann und erfindungsgemäß herangezogen wird.

Hierzu wird die mittels Drucksensor ermittelte Druckabfallkurve mit mindestens einer Referenzkurve verglichen, wobei bei ausreichender Übereinstimmung von Druckabfallkurve und Referenzkurve geschlußfolgert werden kann, daß die der Referenzkurve zugeordnete Kraftstoffsorte die momentan im Kraftstoffversorgungssystem befindliche Kraftstoffsorte ist.

Erfindungsgemäß umfaßt der bereitgestellte Satz von Referenzkurven mindestens zwei Referenzkurven. Ist beispielsweise ein Ottomotor, der mit einem Gemisch aus Benzin und Ethanol betrieben wird, Gegenstand der Untersuchungen, kann es ausreichend sein, eine Referenzkurve für reines Ethanol und eine Referenzkurve für Benzin bereitzustellen, wobei die Referenzkurven für Kraftstoffe mit unterschiedlichem Ethanol- bzw. Benzingehalt durch Interpolation generiert werden.

Die Druckabfallkurve wird erfindungsgemäß mit mindestens einer Referenzkurve verglichen. Der Grund dafür bzw. für diese Formulierung ist, daß bereits die erste, zu Vergleichszwecken herangezogene Referenzkurve mit der ermittelten Druckabfallkurve übereinstimmen kann, so daß ein Heranziehen weiterer Referenzkurven nicht mehr erforderlich ist.

Der Druckabfall in Gestalt einer Druckabfallkurve kann dabei beispielsweise in der Art ermittelt werden, daß der Druck mittels Drucksensor kontinuierlich über die Zeit erfaßt wird. Der Druck kann darüber hinaus aber auch zu mindestens zwei unterschiedlichen Zeitpunkten erfaßt werden, wobei sich die Druckabfallkurve durch Verbinden der mindestens zwei Druckwerte zu den mindestens zwei Zeitpunkten ergibt. Die Kraftstoffsorte kann dann durch Vergleich der Druckabfallkurve mit den bereitgestellten Referenzkurven bestimmt werden.

Aus der Druckabfallkurve kann auch eine Druckdifferenz Δp_{fuel} zwischen zwei Druckwerten der Druckabfallkurve ermittelt werden, wobei diese Druckdifferenz mit den entsprechenden Druckdifferenzen der Referenzkurven verglichen wird. Im diesem Fall werden die Kurven nicht im eigentlichen Sinne d. h. ihrer Gestalt bzw. ihrem Verlauf nach miteinander verglichen. Vielmehr wird die aus der Druckkurve ableitbare Druckdifferenz Δp_{fuel} zu Vergleichszwecken herangezogen. Jedoch liegt im Sinne der vorliegenden Erfindung auch in diesem Fall ein Vergleich von Druckkurve und Referenzkurve vor.

"Abgrenzbares Volumen" im Sinne der vorliegenden Erfindung heißt nicht, daß das Volumen hermetisch abgeschlossen ist, was einen Leckagestrom, der erfindungsgemäß zwingend erforderlich ist, ausschließen würde. Ein abgrenzbares bzw. abgegrenztes Volumen im Sinne der vorliegenden Erfindung liegt aber dann vor, wenn das betrachtete Teilsystem des Kraftstoffversorgungssystems nicht offensichtlich eine Verbindung bzw. Öffnung aufweist, über die sich der Druck auch ohne Leckagestrom abbauen kann.

Eine derartige Verbindung bzw. Öffnung zu Teilen des Kraftstoffversorgungssystems liegt insbesondere dann vor, wenn die mindestens eine Einspritzdüse zur Einspritzung von Kraftstoff geöffnet ist, weshalb eine Ermittlung des Druckabfalls mittels Drucksensor erfindungsgemäß auch vorzugsweise außerhalb des Kraftstoffeinspritzvorganges erfolgen sollte; zumindest sofern der Einspritzvorgang verhindert, daß sich der Druck im betrachteten, abgegrenzten Volumen infolge Leckage abbaut.

Im Gegensatz zu dem aus dem Stand der Technik bekannten Verfahren, welches eine Lambda-Sonde zur Bestimmung der Kraftstoffsorte verwendet, gestattet das erfindungsgemäße Verfahren die Bestimmung der Kraftstoffsorte bevor ein Teil des im Kraftstoffversorgungssystem befindlichen Kraftstoffes verbrannt wurde. Erfindungsgemäß erfolgt die Bestimmung der Kraftstoffsorte ohne Zeitverzug und damit schnell, so daß die Brennkraftmaschine entsprechend dem im Kraftstoffversorgungssystem befindlichen Kraftstoff angepaßt d. h. kalibriert werden kann.

Bei Einsatz des erfindungsgemäßen Verfahrens kann ein falscher d. h. nicht sortengerechter Betrieb der Brennkraftmaschine ausgeschlossen werden. Dies wirkt sich auch vorteilhaft auf die Schadstoffemissionen aus. Die aus dem Stand der Technik bekannten Nachteile, die sich - beispielsweise bei einem Kaltstart - aufgrund einer zu niedrigen Temperatur der Lambda-Sonde ergeben, entfallen zusammen mit der Notwendigkeit eine Lambda-Sonde vorzusehen. Dies gilt auch für die aus einer Verschmutzung der Lambda-Sonde resultierenden Probleme.

Dadurch wird die erste der Erfindung zugrunde liegende Teilaufgabe gelöst, nämlich ein Verfahren aufzuzeigen, mit dem die Bestimmung der Kraftstoffsorte eines in einem Kraftstoffversorgungssystem einer Brennkraftmaschine befindlichen Kraftstoffes schneller und zuverlässiger möglich ist als nach dem Stand der Technik und insbesondere ein nicht sortengerechter Betrieb der Brennkraftmaschine ausgeschlossen werden kann.

Weitere vorteilhafte Varianten des erfindungsgemäßen Verfahrens werden im Zusammenhang mit den Unteransprüchen erörtert.

Vorteilhaft sind Ausführungsformen des Verfahrens, bei denen der Druckabfall mittels des Drucksensors in einer Kraftstoffversorgungsleitung des Kraftstoffversorgungssystems, die als abgrenzbares Volumen dient, ermittelt wird. Die Kraftstoffversorgungsleitung ist leicht zugänglich und bietet ausreichend Möglichkeiten, auf einfache Weise einen Drucksensor vorzusehen. Häufig ist bereits in der Kraftstoffleitung ein Drucksensor zur Erfassung des Kraftstoffdruckes vorgesehen, so daß auf die zusätzliche Anordnung eines Drucksensors verzichtet werden kann. Dieser Drucksensor liefert den momentanen Kraftstoffdruck, der zusammen mit der Einspritzdauer zur Bestimmung bzw. Einstellung der eingespritzten Kraftstoffmenge herangezogen wird, und ist damit Teil der Steuerung der Brennkraftmaschine.

Bei direkteinspritzenden Brennkraftmaschinen sind dabei Ausführungsformen des Verfahrens vorteilhaft, bei denen der Druckabfall mittels des Drucksensors in einer Kraftstoffhochdruckleitung des Kraftstoffversorgungssystems, die als abgrenzbares Volumen dient, ermittelt wird.

Kraftstoffversorgungssysteme für Brennkraftmaschinen mit Saugrohreinspritzung umfassen als wesentliche Komponenten neben dem Kraftstofftank, den Einspritzdüsen und einer Kraftstoffpumpe zur Förderung des Kraftstoffes und zur Generierung des notwendigen Einspritzdrucks eine Kraftstoffversorgungsleitung, die die verschiedenen Komponenten miteinander verbindet und zwar ausgehend vom Kraftstofftank bis hin zu den Einspritzdüsen.

Kraftstoffversorgungssysteme für direkteinspritzende Brennkraftmaschinen verfügen darüber hinaus - neben der eigentlichen Kraftstoffpumpe - über eine zweite Pumpe, nämlich eine Hochdruckpumpe. Während die Hochdruckpumpe für die erforderlichen hohen Einspritzdrücke sorgt, dient die eigentliche Kraftstoffpumpe als sogenannte Vorförderpumpe zur Befüllung der Hochdruckpumpe. Die Kraftstoffversorgungsleitung, die zwischen der Vorförderpumpe und der Hochdruckpumpe angeordnet ist, wird als Niederdruckleitung bezeichnet, wohingegen das Teilstück der Kraftstoffversorgungsleitung, welches zwischen der Hochdruckpumpe und den Einspritzdüsen verläuft, die Kraftstoffhochdruckleitung bildet.

Direkteinspritzende Dieselmotoren verfügen zudem häufig über ein besonderes Einspritzsystem, nämlich ein sogenanntes Common-Rail-Einspritzsystem, bei welchem sämtliche Zylinder der Brennkraftmaschine mittels einer gemeinsamen Kraftstoffhochdruckleitung - dem sogenannten Common Rail - mit Kraftstoff versorgt werden, wobei die individuelle Einspritzung in die einzelnen Zylinder beispielsweise mittels piezoelektrischer Aktuatoren erfolgt bzw. gesteuert wird.

Während die Niederdruckleitung Drücke von bis zu 5 bar aufweist, liegen in der Kraftstoffhochdruckleitung in der Regel Drücke von 200 bar und mehr vor. Bei Common-Rail-Einspritzsystemen werden Drücke von bis zu 1800 bar erreicht.

Vorteilhaft an der in Rede stehenden Verfahrensvariante, bei der der Drucksensor in der Kraftstoffhochdruckleitung angeordnet wird, ist das vergleichsweise hohe Druckniveau der Hochdruckleitung. Die Druckänderung bzw. der Druckabfall infolge Leckage ist in der Kraftstoffhochdruckleitung besonders ausgeprägt d. h. signifikant, so daß hier das unterschiedliche Leckageverhalten der unterschiedlichen Kraftstoffsorten besonders augenfällig wird, was die Unterscheidung der einzelnen Kraftstoffsorten bzw. die Zuordnung der Druckabfallkurve zu einer konkreten Kraftstoffsorte vereinfacht.

Vorteilhaft sind auch Ausführungsformen des Verfahrens, bei denen der Druckabfall mittels des Drucksensors in einer Kraftstoffpumpe des Kraftstoffversorgungssystems, die ein abgrenzbares Volumen umfaßt, ermittelt wird. Förderpumpen weisen prinzipbedingt immer einen mehr oder weniger großen Leckagestrom auf, da die Pumpen zur Förderung bzw. Druckerhöhung mehrere bewegliche Bauteile aufweisen und eine vollständige Abdichtung der Ansaugseite bzw. Niederdruckseite gegenüber der Hochdruckseite nicht bewerkstelligt werden kann.

Vorzugsweise ist der Drucksensor auf der Hochdruckseite der Kraftstoffpumpe angeordnet, um den gegenüber der Ansaugseite höheren Druck der Hochdruckseite nutzen zu können. Die Gründe sind die bereits oben im Zusammenhang mit der Kraftstoffhochdruckleitung Genannten. Daher sind bei direkteinspritzenden Brennkraftmaschinen auch Verfahrenvarianten vorteilhaft bzw. zu bevorzugen, bei denen der Druckabfall mittels des Drucksensors in der Kraftstoffhochdruckpumpe und nicht in der Vorförderpumpe ermittelt wird.

Vorteilhaft sind auch Ausführungsformen des Verfahrens, bei denen der Druckabfall mittels des Drucksensors in einer Einspritzdüse des Kraftstoffversorgungssystems, die ein abgrenzbares Volumen umfaßt, ermittelt wird. Einspritzdüsen verfügen in der Regel über eine bewegliche Düsennadel, die eine Vielzahl von Düsenöffnungen zur Einspritzung von Kraftstoff freigibt bzw. verschließt, und mehrere Kammern, in denen sich Kraftstoff befindet, wobei der Kraftstoff zumindest teilweise d.h. in einigen Bereichen bzw. Kammern der Einspritzdüse unter hohem Druck steht.

Vorteilhaft sind Ausführungsformen des Verfahrens, bei denen die Referenzkurven des bereitgestellten Satzes von Referenzkurven unveränderlich sind und während des Betriebs der Brennkraftmaschine nicht angepaßt werden. Bei dieser Verfahrensvariante werden die Referenzkurven beispielsweise während der Entwicklung der Brennkraftmaschine auf dem Motorenprüfstand generiert und gewissermaßen als statische d.h. unveränderliche Kennfelder in die Motorsteuerung abgelegt, wo sie zu Vergleichszwecken abgerufen werden können.

Vorteilhaft sind aber insbesondere Ausführungsformen des Verfahrens, bei denen ein Sensor vorgesehen wird, mit der die Sauerstoffkonzentration im Abgas bestimmt wird, wobei
■ unter Verwendung der Sauerstoffkonzentration die Kraftstoffsorte des momentan im Kraftstoffversorgungssystem befindlichen Kraftstoffes bestimmt wird,
■ diese Kraftstoffsorte der ermittelten Druckabfallkurve zugewiesen wird, und
■ diese Druckabfallkurve gespeichert wird und im folgenden als Referenzkurve für diese Kraftstoffsorte dient.

Vorteilhaft sind dabei Ausführungsformen des Verfahrens, bei denen im Abgassystem der Brennkraftmaschine eine Lambda-Sonde als Sensor vorgesehen wird, mit der die Sauerstoffkonzentration im Abgas erfaßt wird.

Bei den beiden zuvor genannten Verfahrensvarianten werden die Referenzkurven während des Betriebs der Brennkraftmaschine generiert bzw. aktualisiert. Vorteile bietet diese Vorgehensweise insbesondere, wenn berücksichtigt wird, daß die einzelnen Komponenten des Kraftstoffversorgungssystems mit zunehmender Betriebsdauer Verschleißerscheinungen zeigen und daher auch ihr Leckageverhalten ändern.

Des weiteren weisen die Komponenten Fertigungstoleranzen auf, die von Komponente zu Komponente variieren können, so daß Komponenten derselben Baureihe bzw. Art schon von Hause aus unterschiedliches Leckageverhalten aufweisen bzw. bedingen.

Eine Lambda-Sonde ist nach dem Stand der Technik in der Regel bereits Bestandteil der Motorsteuerung, so daß keine zusätzlichen Kosten für die Bereitstellung dieser Sonde entstehen. Gegenüber dem allgemeinen erfindungsgemäßen Verfahren ist diese Variante somit kostenneutral.

Vorteilhaft sind Ausführungsformen des Verfahrens, bei denen Mittel vorgesehen werden, mit denen gezielt ein Kraftstoffleckagestrom aus dem abgrenzbaren Volumen des Kraftstoffversorgungssystems herbeiführbar ist. Durch das Vorsehen der genannten Mittel bzw. dem Öffnen dieser Mittel kann gezielt ein Leckagestrom erzeugt werden. Dies eröffnet die Möglichkeit, bei Kraftstoffversorgungssystemen, die nur ein geringes originäres Leckageverhalten aufweisen, künstlich einen Leckagestrom einzuleiten.

Ein geringes Leckageverhalten bedingt nämlich, daß sich der Druck in dem abgegrenzten Volumen unabhängig von der jeweiligen Kraftstoffsorte nur langsam abbaut und folglich kein großer Unterschied zwischen den einzelnen Druckabfallkurven der verschiedenen Kraftstoffsorten festzustellen ist, was die Bestimmung der Kraftstoffsorte eines in einem Kraftstoffversorgungssystem einer Brennkraftmaschine befindlichen Kraftstoffes erschwert.

Vorteilhaft sind dabei Ausführungsformen des Verfahrens, bei denen als Mittel ein Absperrelement verwendet wird.

Die zweite der Erfindung zugrunde liegende Aufgabe wird gelöst durch ein Kraftstoffversorgungssystem, das dadurch gekennzeichnet ist, daß Mittel vorgesehen sind, mit denen ein Volumen des Kraftstoffversorgungssystems abgrenzbar ist.

Grundsätzlich ist es nicht zwingend erforderlich, das herkömmliche Kraftstoffversorgungssystem einer Brennkraftmaschine zur Durchführung des erfindungsgemäßen Verfahrens in der beschriebenen Weise zu modifizieren. Das Vorsehen von Mitteln, mit denen ein Volumen des Kraftstoffversorgungssystems abgrenzbar ist, kann aber in einigen Anwendungsfällen vorteilhaft sein.

Wird beispielsweise der Druckabfall in der Kraftstoffhochdruckleitung eines Kraftstoffversorgungssystems ermittelt, kann es sinnvoll sein, in der Kraftstoffhochdruckleitung derartige Mittel zwischen dem abgrenzbaren Volumen und der Kraftstoffhochdruckpumpe vorzusehen, um ein Ausströmen von Kraftstoff aus dem abgrenzbaren Volumen bei geöffneter Pumpe zu verhindern d. h. zu unterbinden.

Wie bereits weiter oben ausgeführt wurde, liegt ein abgegrenztes Volumen im Sinne der vorliegenden Erfindung dann vor, wenn das betrachtete Teilsystem des Kraftstoffversorgungssystems nicht offensichtlich eine Verbindung bzw. Öffnung aufweist, über die sich der Druck auch ohne Leckagestrom abbauen kann. Eine geöffnete Kraftstoffpumpe stellt aber eine solche Verbindung dar, weshalb es vorteilhaft sein kann, zusätzlich Mittel vorzusehen, die eine derartige Verbindung unterbrechen.

Im allgemeinen sind derartige Mittel vorzusehen, falls sie zur Herstellung eines abgrenzbaren Volumens erforderlich bzw. unerläßlich sind, um die Durchführung des Verfahrens zu gewährleisten.

Vorteilhaft sind dabei Ausführungsformen des Kraftstoffversorgungssystems, bei denen als Mittel ein Absperrelement dient.

Im folgenden wird die Erfindung anhand der Figuren 1 bis 4 näher beschrieben. Hierbei zeigt:
- Fig. 1: schematisch die Druckabfallkurven für zwei unterschiedliche Kraftstoffsorten,
- Fig. 2: schematisch eine erste Ausführungsform des Verfahrens,
- Fig. 3: schematisch eine zweite Ausführungsform des Verfahrens, und
- Fig.4: schematisch verschiedene Beispiele für die Anordnung eines Drucksensors bei einer direkteinspritzenden Brennkraftmaschine.

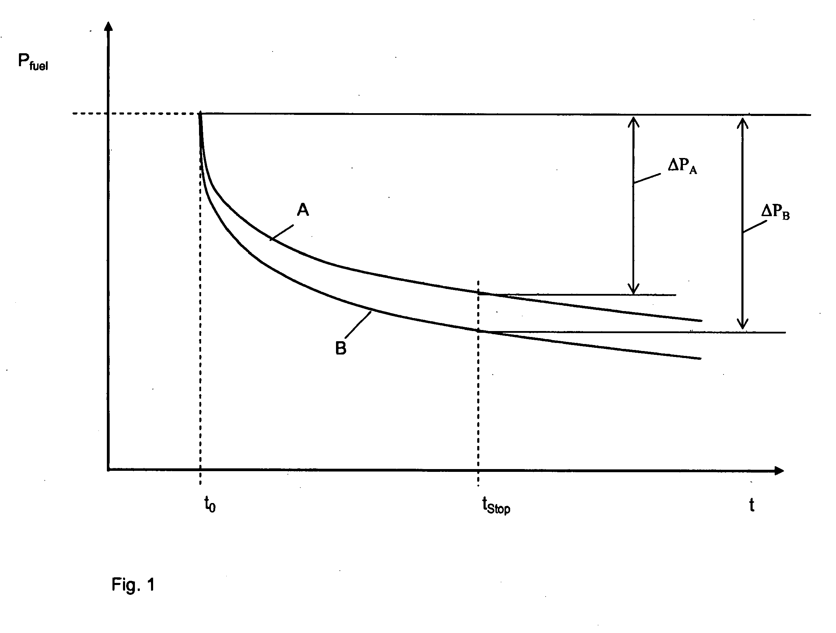

Figur 1 zeigt die mittels Drucksensor in einem abgegrenzten Volumen des Kraftstoffversorgungssystems ermittelten Druckabfallkurven für zwei unterschiedliche Kraftstoffsorten, nämlich Kraftstoffsorte A und Kraftstoffsorte B.

Die Abszisse dient dabei als Zeitachse t, wohingegen auf der Ordinate der Kraftstoffdruck p_{fuel} aufgetragen ist. Die Druckerfassung beginnt jeweils zur einer Startzeit tₒ und endet zu einem Zeitpunkt tₛₜₒₚ.

Aufgrund des unterschiedlichen Leckageverhaltens der verschiedenen Kraftstoffsorten A und B wird der in einem abgrenzbaren Volumen des Kraftstoffversorgungssystems aufgebaute Kraftstoffdruck p_{fuel} unterschiedlich schnell abgebaut und zwar in Abhängigkeit von der jeweiligen Viskosität des Kraftstoffes und damit in Abhängigkeit von der jeweiligen Kraftstoffsorte.

Folglich unterscheiden sich auch die beiden aus den Druckabfallkurven ermittelten Druckdifferenzen Δp_{A} und Δp_{B}. Diese Druckdifferenzen können mit den entsprechenden Druckdifferenzen der Referenzkurven verglichen werden. Vorliegend werden also nicht die Druckabfallkurven in ihrer Gesamtheit d. h. ihrem Verlauf nach mit den Referenzkurven verglichen, sondern die aus der Druckkurve ableitbare Druckdifferenz Δp_{A} bzw. Δp_{B} mit der dazu korrespondierenden Druckdifferenz der Referenzkurven.

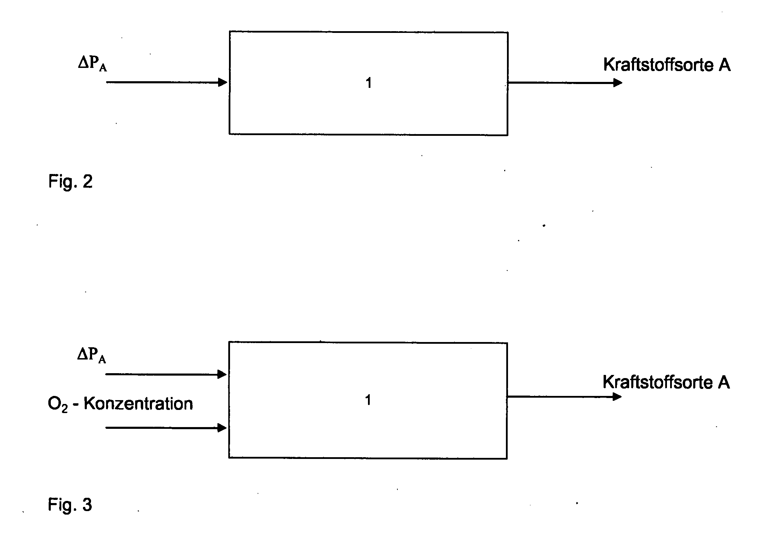

Figur 2 zeigt schematisch eine erste Ausführungsform des Verfahrens. Der mittels Drucksensor ermittelte Druckabfall Δp_{A} wird der Motorsteuerung 1 als Eingangssignal zur Verfügung gestellt, wobei die Motorsteuerung 1 anhand von Referenzkurven die Kraftstoffsorte des in dem Kraftstoffversorgungssystem der Brennkraftmaschine befindlichen Kraftstoffes, vorliegend die Kraftstoffsorte A, bestimmt.

Figur 3 zeigt schematisch eine zweite Ausführungsform des Verfahrens. In Ergänzung zu dem in Figur 2 dargestellten Verfahren wird der Motorsteuerung 1 neben dem Druckabfall Δp_{A} auch die mittels Lambda-Sonde erfaßte Sauerstoffkonzentration (O₂) im Abgas als Eingangssignal zur Verfügung gestellt

Die Motorsteuerung 1 bestimmt unter Verwendung der Sauerstoffkonzentration die Kraftstoffsorte des momentan im Kraftstoffversorgungssystem befindlichen Kraftstoffes und weist diese Kraftstoffsorte der ermittelten Druckabfallkurve bzw. dem ermittelten Druckabfall Δp_{A} zu.

Die Druckabfallkurve bzw. der Druckabfall Δp_{A} wird in der Motorsteuerung gespeichert und im folgenden als Referenzkurve für die Kraftsorte A verwendet.

Im übrigen wird auf Figur 2 und die in Zusammenhang mit dieser Figur gemachten Ausführungen Bezug genommen.

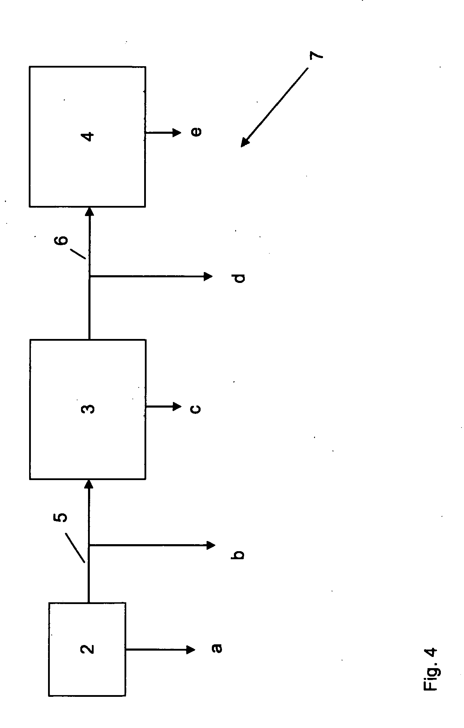

Figur 4 zeigt schematisch verschiedene Beispiele a, b, c, d, e für die Anordnung eines Drucksensors bei einer direkteinspritzenden Brennkraftmaschine.

Gemäß Figur 4 kann der Druckabfall an verschiedenen Stellen a, b, c, d, e im Kraftstoffversorgungssystem 7 mittels Drucksensor erfaßt werden. So kann die Druckerfassung beispielsweise an der Kraftstoffpumpe 2, der Hochdruckpumpe 3, der Einspritzdüse 4, der Niederdruckleitung 5 oder aber an der Hochdruckleitung 6 vorgenommen werden.

### Bezugszeichen

- 1: Motorsteuerung
- 2: Kraftstoffpumpe
- 3: Hochdruckpumpe
- 4: Einspritzdüse
- 5: Niederdruckleitung
- 6: Kraftstoffhochdruckleitung
- 7: Kraftstoffversorgungssystem

- a: eine erste Stelle im Kraftstoffversorgungssystem zur Erfassung des Druckabfalls
- b: eine zweite Stelle im Kraftstoffversorgungssystem zur Erfassung des Druckabfalls
- c: eine dritte Stelle im Kraftstoffversorgungssystem zur Erfassung des Druckabfalls
- d: eine vierte Stelle im Kraftstoffversorgungssystem zur Erfassung des Druckabfalls
- e: eine fünfte Stelle im Kraftstoffversorgungssystem zur Erfassung des Druckabfalls

- A: eine erste Kraftstoffsorte, Druckabfallkurve der Kraftstoffsorte A
- B: eine zweite, zu der ersten Kraftstoffsorte A verschiedene Kraftstoffsorte, Druckabfallkurve der Kraftstoffsorte B
- p_{fuel}: Kraftstoffdruck
- Δp_{A}: Druckabfall der Kraftstoffsorte A
- Δp_{B}: Druckabfall der Kraftstoffsorte B
- Δp_{fuel}: Druckabfall
- t: Zeit
- tₒ: Startzeit der Druckerfassung
- tₛₜₒₚ: Zeitpunkt der Beendigung der Druckerfassung

## Patentansprüche

1. Verfahren zur Bestimmung der Kraftstoffsorte (A,B) eines in einem Kraftstoffversorgungssystem (7) einer Brennkraftmaschine befindlichen Kraftstoffes, **dadurch gekennzeichnet, daß** mittels eines Drucksensors in einem abgrenzbaren Volumen des Kraftstoffversorgungssystems (7) der Druckabfall Δp_{fuel} (Δp_{A},Δp_{B}) infolge eines Kraftstoffleckagestromes aus diesem abgrenzbaren Volumen in Gestalt einer Druckabfallkurve (A,B) ermittelt wird, wobei die auf diese Weise ermittelte Druckabfallkurve (A,B) mit mindestens einer Referenzkurve aus einem bereitgestellten Satz von mindestens zwei Referenzkurven verglichen wird, um die Kraftstoffsorte (A,B) zu bestimmen.

2. Verfahren nach Anspruch 1, **dadurch gekennzeichnet, daß** der Druckabfall Δp_{fuel} (Δp_{A},Δp_{B}) mittels des Drucksensors in einer Kraftstoffversorgungsleitung (5,6) des Kraftstoffversorgungssystems (7), die als abgrenzbares Volumen dient, ermittelt wird.

3. Verfahren zur Bestimmung der Kraftstoffsorte (A,B) eines in einem Kraftstoffversorgungssystem (7) einer direkteinspritzenden Brennkraftmaschine nach Anspruch 1, **dadurch gekennzeichnet, daß** der Druckabfall Δp_{fuel} (Δp_{A},Δp_{B}) mittels des Drucksensors in einer Kraftstoffhochdruckleitung (6) des Kraftstoffversorgungssystems (7), die als abgrenzbares Volumen dient, ermittelt wird.

4. Verfahren nach Anspruch 1, **dadurch gekennzeichnet, daß** der Druckabfall Δp_{fuel} (Δp_{A},Δp_{B}) mittels des Drucksensors in einer Kraftstoffpumpe (2,3) des Kraftstoffversorgungssystems, die ein abgrenzbares Volumen umfaßt, ermittelt wird.

5. Verfahren zur Bestimmung der Kraftstoffsorte (A,B) eines in einem Kraftstoffversorgungssystem (7) einer direkteinspritzenden Brennkraftmaschine nach Anspruch 1 oder 4, **dadurch gekennzeichnet, daß** der Druckabfall Δp_{fuel} (Δp_{A},Δp_{B}) mittels des Drucksensors in einer Kraftstoffhochdruckpumpe (3) des Kraftstoffversorgungssystems (7), die ein abgrenzbares Volumen umfaßt, ermittelt wird.

6. Verfahren nach Anspruch 1, **dadurch gekennzeichnet, daß** der Druckabfall Δp_{fuel} (Δp_{A},Δp_{B}) mittels des Drucksensors in einer Einspritzdüse (4) des Kraftstoffversorgungssystems (7), die ein abgrenzbares Volumen umfaßt, ermittelt wird.

7. Verfahren nach einem der vorherigen Ansprüche, **dadurch gekennzeichnet, daß** die Referenzkurven des bereitgestellten Satzes von Referenzkurven unveränderlich sind und während des Betriebs der Brennkraftmaschine nicht angepaßt werden.

8. Verfahren nach einem der Ansprüche 1 bis 6, **dadurch gekennzeichnet, daß** ein Sensor vorgesehen wird, mit der die Sauerstoffkonzentration im Abgas bestimmt wird, wobei
■ unter Verwendung der Sauerstoffkonzentration die Kraftstoffsorte (A,B) des momentan im Kraftstoffversorgungssystem (7) befindlichen Kraftstoffes bestimmt wird,
■ diese Kraftstoffsorte (A,B) der ermittelten Druckabfallkurve (A,B) zugewiesen wird, und
■ diese Druckabfallkurve (A,B) gespeichert wird und im folgenden als Referenzkurve für diese Kraftstoffsorte (A,B) dient.

9. Verfahren nach Anspruch 8, **dadurch gekennzeichnet, daß** im Abgassystem der Brennkraftmaschine eine Lambda-Sonde als Sensor vorgesehen wird, mit der die Sauerstoffkonzentration im Abgas erfaßt wird.

10. Verfahren nach einem der vorherigen Ansprüche, **dadurch gekennzeichnet, daß** Mittel vorgesehen werden, mit denen gezielt ein Kraftstoffleckagestrom aus dem abgrenzbaren Volumen des Kraftstoffversorgungssystems (7) herbeiführbar ist.

11. Verfahren nach Anspruch 10, **dadurch gekennzeichnet, daß** als Mittel ein Absperrelement verwendet wird.

12. Kraftstoffversorgungssystem (7) für eine Brennkraftmaschine zur Durchführung eines Verfahrens nach einem der vorherigen Ansprüche, **dadurch gekennzeichnet, daß** Mittel vorgesehen sind, mit denen ein Volumen des Kraftstoffversorgungssystems (7) abgrenzbar ist.

13. Kraftstoffversorgungssystem (7) nach Anspruch 12, **dadurch gekennzeichnet, daß** als Mittel ein Absperrelement dient.

## Claims

1. Method for determining the fuel type (A,B) of a fuel located in a fuel supply system (7) of an internal combustion engine, **characterized in that,** by means of a pressure sensor in a delimitable volume of the fuel supply system (7), the pressure drop Δp_{fuel} (Δp_{A},Δp_{B}) as a result of a fuel leakage stream out of this delimitable volume is determined in the form of a pressure drop curve (A, B), the pressure drop curve (A,B) determined in this way being compared with at least one reference curve from a prepared set of at least two reference curves, in order to determine the fuel type (A,B) .

2. Method according to Claim 1, **characterized in that** the pressure drop Δp_{fuel} (Δp_{A},Δp_{B}) is determined by means of the pressure sensor in a fuel supply line (5,6) of the fuel supply system (7), said fuel supply line serving as delimitable volume.

3. Method for determining the fuel type (A,B) of a fuel located in a fuel supply system (7) of a direct-injection internal combustion engine according to Claim 1, **characterized in that** the pressure drop Δp_{fuel} (Δp_{A},Δp_{B}) is determined by means of the pressure sensor in a high-pressure fuel line (6) of the fuel supply system (7), said high-pressure fuel line serving as delimitable volume.

4. Method according to Claim 1, **characterized in that** the pressure drop Δp_{fuel} (Δp_{A},Δp_{B}) is determined by means of the pressure sensor in a fuel pump (2,3) of the fuel supply system, said fuel pump comprising a delimitable volume.

5. Method for determining the fuel type (A,B) of a fuel located in a fuel supply system (7) of a direct-injection internal combustion engine according to Claim 1 or 4, **characterized in that** the pressure drop Δp_{fuel} (Δp_{A},Δp_{B}) is determined by means of the pressure sensor in a high-pressure fuel pump (3) of the fuel supply system (7), said high-pressure fuel pump comprising a delimitable volume.

6. Method according to Claim 1, **characterized in that** the pressure drop Δp_{fuel} (Δp_{A},Δp_{B}) is determined by means of the pressure sensor in an injection nozzle (4) of the fuel supply system (7), said injection nozzle comprising a delimitable volume.

7. Method according to one of the preceding claims, **characterized in that** the reference curves of the prepared set of reference curves are invariable and are not adapted during the operation of the internal combustion engine.

8. Method according to one of Claims 1 to 6, **characterized in that** a sensor is provided, by means of which the oxygen concentration in the exhaust gas is determined,
■ the fuel type (A,B) of the fuel located at a particular moment in the fuel supply system (7) being determined using the oxygen concentration,
■ this fuel type (A,B) being assigned to the pressure drop curve (A,B) determined, and
■ this pressure drop curve (A,B) being stored and serving thereafter as a reference curve for this fuel type (A,B).

9. Method according to Claim 8, **characterized in that** a lambda probe, by means of which the oxygen concentration in the exhaust gas is detected, is provided as a sensor in the exhaust system of the internal combustion engine.

10. Method according to one of the preceding claims, **characterized in that** means are provided by which a fuel leakage stream out of the delimitable volume of the fuel supply system (7) can be brought about in a directed manner.

11. Method according to Claim 10, **characterized in that** the means used is a shut-off element.

12. Fuel supply system (7) for an internal combustion engine for carrying out a method according to one of the preceding claims, **characterized in that** means are provided by which a volume of the fuel supply system (7) can be delimited.

13. Fuel supply system (7) according to Claim 12, **characterized in that** a shut-off element serves as means.

## Revendications

1. Procédé de détermination du type de carburant (A, B) d'un carburant qui se trouve dans un système d'alimentation en carburant (7) d'une machine à combustion interne, **caractérisé en ce que** la chute de pression Δp_{fuel} (Δp_{A}, Δp_{B}) résultant d'un courant de fuite de carburant depuis un volume pouvant être délimité du système d'alimentation en carburant (7) est déterminée sous la forme d'une courbe de chute de pression (A, B) au moyen d'un capteur de pression dans ce volume pouvant être délimité, la courbe de chute de pression (A, B) ainsi déterminée étant comparée avec au moins une courbe de référence d'un ensemble mis à disposition d'au moins deux courbes de référence afin de déterminer le type de carburant (A, B).

2. Procédé selon la revendication 1, **caractérisé en ce que** la chute de pression Δp_{fuel} (Δp_{A}, Δp_{B}) est déterminée au moyen du capteur de pression dans une conduite d'alimentation en carburant (5, 6) du système d'alimentation en carburant (7), laquelle fait office de volume pouvant être délimité.

3. Procédé de détermination du type de carburant (A, B) d'un carburant qui se trouve dans un système d'alimentation en carburant (7) d'une machine à combustion interne à injection directe selon la revendication 1, **caractérisé en ce que** la chute de pression Δp_{fuel} (Δp_{A}, Δp_{B}) est déterminée au moyen du capteur de pression dans une conduite de carburant à haute pression (6) du système d'alimentation en carburant (7), laquelle fait office de volume pouvant être délimité.

4. Procédé selon la revendication 1, **caractérisé en ce que** la chute de pression Δp_{fuel} (Δp_{A}, Δp_{B}) est déterminée au moyen du capteur de pression dans une pompe à carburant (2, 3) du système d'alimentation en carburant, laquelle inclut un volume pouvant être délimité.

5. Procédé de détermination du type de carburant (A, B) d'un carburant qui se trouve dans un système d'alimentation en carburant (7) d'une machine à combustion interne à injection directe selon la revendication 1 ou 4, **caractérisé en ce que** la chute de pression Δp_{fuel} (Δp_{A}, Δp_{B}) est déterminée au moyen du capteur de pression dans une pompe à haute pression à carburant (3) du système d'alimentation en carburant (7), laquelle inclut un volume pouvant être délimité.

6. Procédé selon la revendication 1, **caractérisé en ce que** la chute de pression Δp_{fuel} (Δp_{A}, Δp_{B}) est déterminée au moyen du capteur de pression dans un injecteur (4) du système d'alimentation en carburant (7), lequel inclut un volume pouvant être délimité.

7. Procédé selon l'une des revendications précédentes, **caractérisé en ce que** les courbes de référence de l'ensemble mis à disposition de courbes de référence ne sont pas modifiables et ne sont pas adaptées pendant le fonctionnement de la machine à combustion interne.

8. Procédé selon l'une des revendications 1 à 6, **caractérisé en ce qu'**il est prévu un capteur avec lequel est déterminée la concentration d'oxygène dans les gaz d'échappement,
* le type de carburant (A, B) du carburant qui se trouve momentanément dans le système d'alimentation en carburant (7) étant déterminé en utilisant la concentration d'oxygène,
* ce type de carburant (A, B) étant associé à la courbe de chute de pression déterminée (A, B) et
* cette courbe de chute de pression (A, B) étant enregistrée et servant par la suite de courbe de référence pour ce type de carburant (A, B).

9. Procédé selon la revendication 8, **caractérisé en ce qu'**une sonde lambda avec laquelle est détectée la concentration d'oxygène dans les gaz d'échappement est prévue comme capteur dans le système de gaz d'échappement de la machine à combustion interne.

10. Procédé selon l'une des revendications précédentes, **caractérisé en ce qu'**il est prévu un moyen qui provoque volontairement un courant de fuite de carburant depuis le volume pouvant être délimité du système d'alimentation en carburant (7).

11. Procédé selon la revendication 10, **caractérisé en ce que** le moyen utilisé est un élément d'arrêt.

12. Système d'alimentation en carburant (7) pour une machine à combustion interne destiné à mettre en oeuvre un procédé selon l'une des revendications précédentes, **caractérisé en qu'**il est prévu un moyen à l'aide duquel il est possible de délimiter un volume du système d'alimentation en carburant (7).

13. Système d'alimentation en carburant (7) selon la revendication 12, **caractérisé en ce que** le moyen utilisé est un élément d'arrêt.
